# EUROPÄISCHE PATENTANMELDUNG

(11) **EP 4 177 117 A1**
(43) Veröffentlichungstag der Anmeldung: **10.05.2023**
(21) Anmeldenummer: 21020544.9
(22) Anmeldetag: 03.11.2021
(51) Int. Cl.: B60R 21/38, E05B 77/08

(54) **FAHRZEUGHAUBENSCHARNIER FÜR EIN FAHRZEUG**

(71) Anmelder: Innomotive Systems Hainichen GmbH, 09661 Hainichen (DE)
(72) Erfinder: KRUMBIEGEL, Ulrich, 09661 Striegistal (DE)
(74) Vertreter: Rebbereh, Cornelia

(57) **Zusammenfassung**

Bei einem Fahrzeughaubenscharnier (2) für ein Fahrzeug (1), umfassend zumindest ein erstes Scharnierteil (21), das mit einer Fahrzeughaube (10) fest verbindbar oder verbunden ist, zumindest ein zweites Scharnierteil (22), das mit einer Fahrzeugkarosserie (11) fest verbindbar oder verbunden ist, und zumindest ein drittes Scharnierteil (23), wobei das zumindest eine dritte Scharnierteil (23) das zumindest eine erste Scharnierteil (21) mit dem zumindest einen zweiten Scharnierteil (22) gelenkig verbindet, sind das zumindest eine erste Scharnierteil (21) und das zumindest eine dritte Scharnierteil (23) vermittels zumindest eines Verformungselements (3) miteinander verbunden und weisen eine gemeinsame Drehachse (25) auf, wobei das Verformungselement (3) bei Verdrehen der Scharnierteile (21, 23) um ihre gemeinsame Drehachse (25) gezielt deformierbar ist und einer Relativbewegung der Scharnierteile (21, 23) entgegenwirkt, und wobei diese gemeinsame Drehachse (25) als zusätzliches Gelenk zum Aufstellen der Fahrzeughaube (10) des Fahrzeugs (1) im Falle eines Aufpralls eines Fußgängers dient, wobei dieses zusätzliche Gelenk im Normalbetrieb durch zumindest ein Verriegelungselement (4) verriegelbar oder verriegelt ist.

## Beschreibung

Die Erfindung betrifft ein Fahrzeughaubenscharnier für ein Fahrzeug, umfassend zumindest ein erstes Scharnierteil, das mit einer Fahrzeughaube fest verbindbar oder verbunden ist, zumindest ein zweites Scharnierteil das mit einer Fahrzeugkarosserie fest verbindbar oder verbunden ist, und zumindest ein drittes Scharnierteil, wobei das zumindest eine dritte Scharnierteil das zumindest eine erste Scharnierteil mit dem zumindest zweiten Scharnierteil gelenkig verbindet.

Derartige Fahrzeughaubenscharniere für Fahrzeuge sind im Stand der Technik bekannt. Diese dienen einerseits dazu, ein Öffnen einer Fahrzeughaube eines Fahrzeugs zu ermöglichen, andererseits dem Fußgängerschutz im Falle eines Unfalls, da durch das Vorsehen der zumindest drei Scharnierteile die Fahrzeughaube des Fahrzeugs vor dem Aufschlagen eines Fußgängers aufgestellt bzw. angehoben werden kann. Durch das Aufstellen oder Anheben der Fahrzeughaube kann ein Fußgänger, der von dem Fahrzeug erfasst wird und mit seinem Körper und Kopf auf die Fahrzeughaube aufschlägt, in gewissem Maße seiner Bewegung abgefangen und dadurch der Aufschlag abdämpft und er hierdurch insbesondere vor gravierenden Kopfverletzungen besser geschützt werden.

Aus der DE 10 2009 041 418 A1 ist ein solches Fahrzeughaubenscharnier zum Anheben einer Fahrzeughaube in einer Unfallsituation bekannt. Dieses umfasst ein fahrzeugkarosserieseitig befestigtes Scharnierunterteil und ein haubenseitig befestigtes Scharnieroberteil, wobei das Scharnierunterteil und das Scharnieroberteil gelenkig miteinander verbunden sind und wobei das Scharnieroberteil zwei in einer Unfallsituation relativ zueinander verschwenkbare Abschnitte aufweist, welche von einer ein Riegelelement aufweisenden Arretiereinrichtung miteinander verriegelt werden können. Die Arretiereinrichtung umfasst eine Haltefläche und eine Sperrfläche, welche zur Verriegelung von erstem und zweitem Abschnitt zwei gegenüberliegende Seiten eines an dem ersten Abschnitt angeordneten Schließelementes kontaktieren, wobei die Haltefläche von dem an dem zweiten Abschnitt verschwenkbar angeordneten Riegelelement bereitgestellt wird und die Sperrfläche an dem zweiten Abschnitt starr angeordnet ist. Dem Scharnier ist ein pyrotechnisches Aktorelement zugeordnet, das die Fahrzeughaube in einer Unfallsituation, insbesondere sensorgesteuert ausgelöst, anhebt.

Auch aus der EP 1 412 601 B1 ist ein Fahrzeughaubenscharnier in Form eines Doppelarmgelenkscharniers für die Fahrzeughaube eines Kraftfahrzeugs mit einem ersten und einem zweiten Arm zwischen einer mit der Fahrzeughaube verbundenen Schiene und einer mit der Karosserie verbundenen Schiene bekannt. Zumindest ein Arm ist zweiteilig ausgeführt und besteht aus zwei Streben, die mittels eines Verbindungsgelenks gelenkig miteinander verbunden und mittels einer bei einer bestimmten Belastung nachgiebigen Verbindung starr aneinander befestigt sind, so dass beim Trennen der Verbindung infolge einer stoßartigen Belastung die Schienen sich im Wesentlichen widerstandslos nähern, wobei ein Druckstück vorhanden ist, das an einer der Streben angelegt werden kann. Das Druckstück weist einen Kopf auf, der die von dem Druckstück belastete Strebe hintergreift.

Die DE 10 2007 033 325 A1 offenbart ein Scharnier zur schwenkbeweglichen Anbindung einer Abdeckung oder Haube an einem Kraftfahrzeug. Dieses umfasst ein Karosserieanbindungsteil, einen Verbindungsarm und ein daran gehaltenes Haubenanbindungsteil, wobei der Verbindungsarm gegenüber dem Karosserieanbindungsteil schwenkbeweglich angeschlagen ist. Zur Verwirklichung einer Fußgängerschutzfunktion ist das Haubenanbindungsteil an dem abstehenden Ende des Verbindungsarms in einem durch ein Sperrelement gegen ein Verschwenken aus einer Ruhelage gesperrten Gelenk gehalten. Das Sperrelement ist unter Freigabe des Gelenks beim Überschreiten eines vorgegebenen Drehmoments zerstörbar ausgestaltet. Zum Reversieren der Fußgängerschutzfunktion sind aktivierbare Sperrmittel zum Festlegen des Gelenks vorgesehen, deren Aktivierung durch ein Verschwenken des Gelenks aus der Ruhelage heraus bewirkt werden kann. Zusätzlich ist eine Betätigungseinrichtung in Form eines Aktuators vorgesehen, durch den das Haubenanbindungsteil aus der Ruhestellung in eine von dem Karosserieanbindungsteil entfernte Position verlagert werden kann. Die Motorraumabdeckung kann aus der angehobenen Lage nach dem Auslösen der Fußgängerschutzfunktion annähernd in die Lage vor dem Auslösen der Fußgängerschutzfunktion wieder zurückgesetzt werden, um eine Weiterbenutzung des Fahrzeugs zu ermöglichen. Zum erneuten Sperren des Gelenks dienen die aktivierbaren Sperrmittel, die einen Stift umfassen, der in eine Bohrung in benachbarten Abschnitten von Verbindungsarm und Haubenanbindungsteil hindurch verlaufend verbracht werden kann. Um die erneute Sperrung beim Zurücksetzen automatisch zu bewirken, sobald die entsprechenden Aussparungen oder Bohrungen in eine zueinander fluchtende Lage gelangen, ist der Stift durch ein vorgespanntes Federmittel in Richtung auf eine Zerstörung des Gelenks vorsehende Lage vorbelastet. Das Federmittel ist an seinem einen Ende mit dem flachen Abschnitt des Verbindungsarms verschweißt oder vernietet, während das andere Ende vorgespannt auf dem Ende des Stifts aufliegt.

Die vorstehend genannten Fahrzeughaubenscharniere des Standes der Technik umfassen vergleichsweise viele Komponenten bzw. Elemente, die ineinandergefügt und miteinander verbunden werden müssen. Dies führt auch zu vergleichsweise hohen Kosten. Es wäre daher wünschenswert, die Kosten für die Herstellung eines Fahrzeughaubenscharniers zu reduzieren, da im normalen Lebenszyklus eines Fahrzeugs ein Unfall mit einem Fußgänger nie oder höchstens einmal vorkommt, so dass die Kosten für einen Fußgängerschutz auf das unbedingt Erforderliche reduziert werden könnten.

Der vorliegenden Erfindung liegt daher die Aufgabe zugrunde, ein Fahrzeughaubenscharnier für ein Fahrzeug, das zumindest ein erstes Scharnierteil, das mit einer Fahrzeughaube fest verbindbar oder verbunden ist, zumindest ein zweites Scharnierteil, das mit einer Fahrzeugkarosserie fest verbindbar oder verbunden ist, und zumindest ein drittes Scharnierteil umfasst, wobei das zumindest eine dritte Scharnierteil das zumindest eine erste Scharnierteil mit dem zumindest einen zweiten Scharnierteil gelenkig verbindet, dahingehend zu verbessern, dass trotz Beibehaltens der Funktionalität eines Fußgängerschutzes die Kosten für die Herstellung eines solchen Fahrzeughaubenscharniers gegenüber den Lösungen des Standes der Technik reduziert werden können.

Die Aufgabe wird für ein Fahrzeughaubenscharnier nach dem Oberbegriff des Anspruchs 1 dadurch gelöst, dass das zumindest eine erste Scharnierteil und das zumindest eine dritte Scharnierteil vermittels zumindest eines Verformungselements miteinander verbunden sind und eine gemeinsame Drehachse aufweisen, wobei das Verformungselement bei Verdrehen der Scharnierteile um ihre gemeinsame Drehachse gezielt deformierbar ist und einer Relativbewegung der Scharnierteile entgegenwirkt, und wobei diese gemeinsame Drehachse als zusätzliches Gelenk zum Aufstellen der Fahrzeughaube des Fahrzeugs im Falle eines Aufpralls eines Fußgängers dient, wobei dieses zusätzliches Gelenk im Normalbetrieb durch zumindest ein Verriegelungselement verriegelbar oder verriegelt ist. Weiterbildungen der Erfindung sind in den abhängigen Ansprüchen definiert.

Dadurch wird ein Fahrzeughaubenscharnier für ein Fahrzeug geschaffen, das zumindest ein erstes Scharnierteil, zumindest ein zweites Scharnierteil und zumindest ein drittes Scharnierteil umfasst, wobei das zumindest eine erste Scharnierteil und das zumindest eine dritte Scharnierteil über zumindest ein Verformungselement miteinander verbunden sind. Das Verformungselement ist dabei so ausgestaltet, dass bei Drehen der beiden Scharnierteile um ihre gemeinsame Drehachse das Verformungselement gezielt deformiert werden kann bzw. deformiert wird und nachfolgend einer Relativbewegung der Scharnierteile entgegenwirkt. Die gemeinsame Drehachse zwischen dem zumindest einen ersten Scharnierteil und dem zumindest einen dritten Scharnierteil dient als zusätzliches Gelenk zum Aufstellen der Fahrzeughaube des Fahrzeugs im Falle eines Unfalls mit einem Fußgänger und hierbei Aufprall des Fußgängers auf der Fahrzeughaube. Dieses zusätzliche Gelenk in Form der gemeinsamen Drehachse zwischen dem zumindest einen ersten Scharnierteil und dem zumindest einen dritten Scharnierteil ist im Normalbetrieb jedoch durch zumindest ein Verriegelungselement verriegelt bzw. kann durch dieses verriegelt werden, so dass im Normalbetrieb keine gelenkige Verbindung zwischen dem zumindest einen ersten Scharnierteil und dem zumindest einen dritten Scharnierteil freigegeben ist. Das Verformungselement ermöglicht somit verschiedene Funktionen, dient in seiner ersten Funktion als Verbindung zwischen dem ersten Scharnierteil und dem dritten Scharnierteil. Seine zweite Funktion ist es, dass es sich beim Verdrehen der beiden Scharnierteile um ihre gemeinsame Drehachse, in der das Verformungselement angeordnet ist, gezielt deformieren kann und hierbei auch als Dämpfungselement dient, wobei es sich insbesondere am Ende des Deformationsvorgangs, wenn also die Fahrzeughaube im Wesentlichen vollständig aufgestellt ist, um einen Fußgänger abzufangen, nur noch vergleichsweise weniger verformt als zu Beginn des Verformungsvorgangs bzw. eine weitere Verformung erschwert. Da vorliegend lediglich das Verformungselement als ein einziges, mehrere Funktionen in sich vereinigendes Bauteil vorgesehen wird, können hierdurch Kosten eingespart werden, da im Stand der Technik zur Erfüllung dieser Funktionen mehrere Bauteile oder Einzelkomponenten erforderlich sind.

Im Normalbetrieb werden der erste Scharnierteil und der dritte Scharnierteil vermittels des zumindest einen Verformungselementes so miteinander verbunden, dass sie nicht um die gemeinsame Drehachse gegeneinander verdreht werden, sondern zusammen ohne ein Verdrehen gegeneinander um ein den dritten Scharnierteil und den zweiten Scharnierteil miteinander verbindendes Gelenk verschwenkt werden können. Dies ist das Gelenk, das zum regulären Öffnen der Fahrzeughaube dient. Um in diesem Normalbetrieb das zusätzliche Gelenk in Form der gemeinsamen Drehachse zwischen dem zumindest einen ersten Scharnierteil und dem zumindest einen dritten Scharnierteil zu sperren bzw. zu verriegeln, ist das zumindest eine Verriegelungselement vorgesehen. Zum gezielten Verschwenken des zumindest einen ersten Scharnierteils gegenüber dem zumindest einen dritten Scharnierteil und hierbei gezielten Deformieren des Verformungselementes wird zunächst das zumindest eine Verriegelungselement entriegelt, so dass nachfolgend die Scharnierteile, also das zumindest eine erste Scharnierteil und das zumindest eine dritte Scharnierteil, gegeneinander um die gemeinsame Drehachse herum verschwenkt werden können.

Das zumindest eine Verrieglungselement ist vorteilhaft als kraft- und/oder formschlüssig mit dem zumindest einen ersten Scharnierteil und dem zumindest einen dritten Scharnierteil verbindbares oder verbundenes Element ausgebildet.

Insbesondere kann das zumindest eine Verriegelungselement zumindest einen ersten Abschnitt zum form- und/oder kraftschlüssigen Verbinden mit zumindest einem der beiden Scharnierteile und zumindest einen zweiten Abschnitt zum formschlüssigen Verbinden mit dem anderen der beiden Scharnierteile aufweisen. Beispielsweise kann das zumindest eine Verrieglungselement nach Art eines Niets ausgebildet sein, wobei dieser formschlüssig in einer Öffnung in einem der beiden Scharnierteile, insbesondere dem zumindest einen dritten Scharnierteil, angeordnet ist und ferner kraftschlüssig mit dem anderen Scharnierteil verbunden ist, insbesondere dem zumindest einen ersten Scharnierteil. Bei Ausüben einer Lösekraft zum Entriegeln des zumindest einen Verriegelungselementes kann insbesondere die kraftschlüssige Verbindung gelöst und dementsprechend das zumindest eine Verriegelungselement aus seiner Verriegelungsposition in eine gelöste Position verbracht werden. Bei Vorsehen eines nietartigen Verriegelungselements kann dieser z.B. in eine aus zumindest dem zumindest einen dritten Scharnierteil ausgeknöpfte Position verbracht werden.

Weiter vorteilhaft ist zum Ausüben einer Aufstell- und Entriegelungskraft auf das zumindest eine erste Scharnierteil zumindest eine Aufstell- und Entriegelungseinrichtung vorgesehen, z.B. in Form eines Aktuators, wie eines pyrotechnischen Aktuators. Diese zumindest eine Aufstell- und Entriegelungseinrichtung kann insbesondere an einem der beiden Scharnierteile, die gegeneinander verschwenkt werden sollen, also an dem zumindest einen ersten Scharnierteil oder dem zumindest einem dritten Scharnierteil, angreifen. Durch das Ausüben der Aufstell- und Entriegelungskraft vermittels der zumindest einen Aufstell- und Entriegelungseinrichtung auf eines der Scharnierteile, insbesondere das zumindest eine erste Scharnierteil, kann die Verbindung von erstem und dritten Scharnierteil gelöst und somit die Fahrzeughaube zum Ausüben der Fußgängerschutzfunktion aufgestellt werden.

Das zumindest eine Verriegelungselement ist weiter vorteilhaft an dem zumindest einen ersten Scharnierteil und/oder dem zumindest einen dritten Scharnierteil so angeordnet, dass das zumindest eine Verriegelungselement beim Überdrücken der Fahrzeughaube in Öffnungsrichtung unbelastet bleibt. Dies kann insbesondere dadurch erfolgen, dass das zumindest eine Verriegelungselement in Richtung abgewandt von dem bezüglich des Fahrzeughaubenscharniers distalen Ende der Fahrzeughaube an erstem und dritten Scharnierteil angeordnet ist, so dass beim Ausüben der Öffnungskraft auf die Fahrzeughaube der Kraftfluss nicht durch die Verbindung des zumindest einen Verriegelungselements und der beiden Scharnierteile, des zumindest einen ersten Scharnierteils und es zumindest einen dritten Scharnierteils, geht. Ein Überdrücken der Fahrzeughaube in Öffnungsrichtung stellt einen Missbrauchsfall dar, so dass in diesem Falle das Verriegelungselement nicht aus seiner Verriegelungselement entfernt wird, so dass es weiterhin seine Funktion ausübt, also den zumindest einen ersten Scharnierteil und zumindest einen dritten Scharnierteil miteinander verbindet bzw. aneinander festhält.

Das zumindest eine Verformungselement kann weiter vorteilhaft als separates Element ausgebildet und mit dem zumindest einen ersten und dem zumindest einen dritten Scharnierteil verbunden sein bzw. werden. Ferner ist es möglich, dass das zumindest eine Verformungselement mit dem zumindest einem ersten Scharnierteil und/oder dem zumindest einem dritten Scharnierteil fest verbunden oder sogar einteilig ausgebildet ist. Beispielsweise kann das Verformungselement in eines der beiden Scharnierteile integriert sein und mit dem anderen Scharnierteil fest verbunden werden, z.B. form- und kraftschlüssig, wie durch Nieten oder Clinchen, oder stoffschlüssig, wie durch Schweißen. Ferner können beide Scharnierteile jeweils ein Teilstück ausbilden und die Teilstücke durch ein entsprechend ausgebildetes Verformungselement miteinander verbunden werden. In diesem Falle kann ein komplex ausgebildetes Verformungselement sowohl die beiden Scharnierteile als auch das eigentliche Verformungselement umfassen. Das eigentliche Verformungselement kann in diesem Falle beispielsweise als eine Art Filmscharnier zwischen den beiden Scharnierteilen ausgebildet sein.

Weiter vorteilhaft steht das zumindest eine Verformungselement in seiner Nennposition unter einer Vorspannung um die gemeinsame Drehachse des zumindest einen ersten Scharnierteils und des zumindest einen dritten Scharnierteils. Diese Vorspannung kann zum Unterstützen und somit der Beschleunigung der Aufstellbewegung beim Aufstellen der Fahrzeughaube zu Beginn des Aufstellhubs genutzt werden, so dass das Aufstellen noch schneller erfolgen und somit der Fußgängerschutz noch schneller aufgestellt werden kann. Es kann also eine vorgebbare Aufstellhöhe der Fahrzeughaube in einer vorgebbaren Zeit erreicht werden. Ferner hält die Vorspannung des Verformungselementes das System des Fahrzeughaubenscharniers spielfrei und damit auch geräuschfrei bei der Bewegung.

Als weiter vorteilhaft erweist es sich, das zumindest eine Verformungselement entlang seiner Längserstreckung mit zumindest zwei Ausformungen zu versehen, die mit Abschnitten der beiden Scharnierteile, des zumindest einen ersten Scharnierteils und des zumindest einen dritten Scharnierteils, ineinandergreifen zum Erzielen einer axialen Verriegelung des zumindest einen Verformungselements mit den beiden Scharnierteilen. Besonders bevorzugt können die Abschnitte der beiden Scharnierteile Aufnahmeöffnungen, insbesondere schlitzförmige Aufnahmeöffnungen sein. Ferner können die zumindest zwei Ausformungen entlang der Längserstreckung des zumindest einen Verformungselements Vertiefungen oder Nuten mit randseitigen oder axialen Begrenzungen sein. Beispielsweise können abwechselnd an den beiden einander gegenüberliegenden Rändern des Verformungselements Vertiefungen oder Nuten angeordnet sein. Die Vertiefungen oder Nuten können insbesondere Prägungen sein. Nach dem Einfügen des Verformungselements in die Aufnahmeöffnungen der beiden Scharnierteile unter einem vorbestimmbaren bzw. vorbestimmten Winkel, der nicht der späteren Nennlage des Verformungselements entspricht, wird das Verformungselement anschließend in seine Nennlage verbracht, wobei die Scharnierteile aus dem vorbestimmten Montagewinkel heraus in ihre Nennlage verdreht werden. Hierdurch erfolgt eine axiale Verriegelung des Verformungselements mit den Scharnierteilen im Bereich der randseitigen bzw. axialen Begrenzungen des Verformungselements nach dem Verdrehen der Scharnierteile aus dem vorbestimmten Montagewinkel heraus in die Nennlage. Über die axialen Begrenzungen werden axiale Anlageflächen für einen axialen Halt des Verformungselements unter Vorspannung geschaffen. Die gewünschte Vorspannung wird somit hierdurch erzeugt und kann im Auslösefall, also bei einem Unfall mit einem Fußgänger die gewünschte anfänglich schnelle Aufstellbewegung der Fahrzeughaube unterstützen und somit beschleunigen.

Durch das Vorsehen der Vertiefungen oder Nuten und axialen Begrenzungen entlang des Verformungselementes kann dieses werkzeuglos mit den beiden Scharnierteilen verbunden werden, ohne dass zusätzliche Niet- und/oder Einpressvorgänge erforderlich wären.

Weiter vorteilhaft ist zumindest ein erstes Anschlagelement vorgesehen und mit dem zumindest einen ersten Scharnierteil verbunden. Ferner ist vorteilhaft zumindest eine Anlauffase an dem zumindest einen dritten Scharnierteil vorgesehen. Das zumindest eine erste Anschlagelement vorteilhaft ist so an dem zumindest einen ersten Scharnierteil angeordnet, dass es beim Verschwenken des zumindest einen ersten Scharnierteils gegenüber dem zumindest einen dritten Scharnierteil dessen zumindest eine Anlauffase kontaktiert und durch diese um eine Wegstrecke in Richtung weg von dem zumindest einen dritten Scharnierteil verschoben werden kann oder wird. Das zumindest eine erste Anschlagelement kann ferner mittels zumindest eines oder über zumindest einen elastischen Verbindungsabschnitt oder zumindest ein elastisches Verbindungselement mit dem zumindest einen ersten Scharnierteil verbunden sein. Insbesondere können das zumindest eine Scharnierteil, das zumindest eine erste Anschlagelement und das zumindest eine elastische Verbindungselement oder der zumindest eine Verbindungsabschnitt einteilig ausgebildet oder zu einem Teil gefügt oder fest miteinander verbunden sein.

Ferner kann der zumindest eine dritte Scharnierteil zumindest ein zweites Anschlagelement aufweisen. Das zumindest eine zweite Anschlagelement dient dabei als oberer Endanschlag für das zumindest eine erste Anschlagelement des zumindest einen ersten Scharnierteils bei dessen Bewegung in Aufstellrichtung der Fahrzeughaube. Der zumindest eine dritte Scharnierteil kann ferner zumindest ein drittes Anschlagelement, insbesondere in zumindest einer Aufnahmeöffnung, in die das zumindest eine erste Anschlagelement aufnehmbar ist, aufweisen. Das zumindest eine dritte Anschlagelement dient als Endanschlag für das zumindest eine erste Anschlagelement des zumindest einen ersten Scharnierteils bei dessen Bewegung entgegen der Aufstellrichtung der Fahrzeughaube. Über die drei Anschlagelemente ist es somit möglich, ein Rückschwingen des Fahrzeughaubenscharniers nach dem Erreichen des maximalen Hubs, also in maximaler Aufstellposition, zu verhindern, da sich das zumindest eine erste Anschlagelement insbesondere aufgrund seiner elastischen Eigenschaften und seiner vorgebbaren Winkellage in Verbindung mit dem Verschieben um eine Wegstrecke in Richtung weg von dem zumindest einen dritten Scharnierteil bei einer möglichen Rückbewegung entgegen der Aufstellrichtung in oder an dem zumindest einem dritten Anschlagelement, wie einer Begrenzungswandung einer Aufnahmeöffnung, in die das erste Anschlagelement nach Erreichen des zweiten Anschlagelements hineingreift, verhakt. Das zumindest eine erste Anschlagelement greift oder schnappt also in diese Aufnahmeöffnung ein und wird dann in dieser Aufnahmeöffnung gehalten, da ein Austauchen aus dieser durch den Versatz um die Wegstrecke verhindert wird. Vielmehr stützt es sich gegen eine Begrenzungswandung der Aufnahmeöffnung als drittem Anschlagelement ab. Es kann somit zumindest eine vorgebbare Mindesthöhe der aufgestellten Fahrzeughaube über eine vorgebbare Zeit hinweg gehalten werden. Der maximale Hub wird nach Erreichen des zumindest einen zweiten Anschlagelements, das als oberer Endanschlag für das zumindest eine erste Anschlagelement des zumindest einen ersten Scharnierteils bei dessen Aufstellbewegung dient, erreicht. Den unteren Endanschlag bildet das dritte Anschlagelement, insbesondere eine untere Begrenzungswandung der Aufnahmeöffnung, in die das zumindest eine erste Anschlagelement eintaucht bzw. auf welcher Begrenzungswandung sich das zumindest eine erste Anschlagelement abstützt. Somit wird auf einfache Art und Weise eine unerwünschte Rückbewegung der als Fußgängerschutz aufgestellten Fahrzeughaube durch Zusammenwirken des ersten und des dritten und auch des zweiten Anschlagelements verhindert und eine Art Sperre geschaffen. Dies ist mit deutlich weniger Aufwand und somit auch deutlich geringeren Kosten als beispielsweise beim Stand der Technik der DE 10 2007 003 325 A1 möglich.

Soll die Fahrzeughaube später in ihre Ausgangslage zurückgedrückt werden, wird das zumindest eine erste Anschlagelement aus der Verrastung in oder an dem zumindest einen dritten Anschlagelement unter Verschieben um die vorstehend genannte Wegstrecke hin zu dem dritten Scharnierteil gedrückt, so dass nachfolgend das erste Anschlagelement aus dem dritten Anschlagelement, wie der Aufnahmeöffnung, austauchen und die Verriegelung der Anschlagelemente aneinander aufgehoben werden kann.

Grundsätzlich kann das Fahrzeughaubenscharnier auch in Verbindung mit Mehrgelenkscharnieren verwendet werden, wobei ein Momentan-Pol eines solchen Mehrgelenkscharniers in einer Drehachse bzw. einem Gelenk zwischen dem ersten und dem zweiten Scharnierteil liegen kann.

Gemäß dem vorliegenden Fahrzeughaubenscharnier können somit Komponenten oder Elemente des Fahrzeughaubenscharniers, die im normalen Lebenszyklus des Scharniers nie oder höchstens einmal genutzt werden, in ihrer konstruktiven Ausgestaltung auf das Wesentliche, insbesondere unter Zusammenfassen ihrer Funktionen in einem Element, reduziert werden. Hierdurch können Kosten eingespart werden, da nur ein Element mehrere Funktionen übernimmt und Komponenten, die im normalen Lebenszyklus eines solchen Scharniers nicht benötigt werden, vollständig entfallen können. Das Verformungselement, das in der Gelenkachse bzw. der gemeinsamen Drehachse zwischen erstem und drittem Scharnierteil eingefügt ist, dient als Verbindungsmittel der beiden Scharnierteile, als gemeinsame Drehachse und als Dämpfungselement sowie aufgrund seiner Vorspannung als Mittel zum Unterstützen und Beschleunigen der Aufstellbewegung der Fahrzeughaube in deren Anfangsphase des Aufstellvorgangs. Je nach Ausgestaltung des Verformungselements ist ferner eine werkzeuglose Montage der Verbindung von erstem und drittem Scharnierteil möglich.

Zur näheren Erläuterung der Erfindung wird diese im Folgenden näher anhand der Zeichnungen beschrieben. Diese zeigen in:
- Figur 1: eine Seitenansicht eines Teils eines Fahrzeugs im Bereich von dessen Fahrzeughaube und eines Karosserieteils des Fahrzeugs, die miteinander über ein erfindungsgemäßes Fahrzeughaubenscharnier gelenkig verbunden sind,
- Figur 2: eine Seitenansicht des Details der Fahrzeughaube und des Karosserieteils mit dazwischen angeordnetem erfindungsgemäßen Fahrzeughaubenscharnier gemäß Figur 1, wobei die Fahrzeughaube zum Fußgängerschutz bei einem Unfall mit einem Fußgänger aufgestellt ist,
- Figur 3: eine perspektivische Ansicht eines erfindungsgemäßen Fahrzeughaubenscharniers,
- Figur 4: eine um etwa 180 ° gedrehte perspektivische Ansicht des Fahrzeughaubenscharniers gemäß Figur 3,
- Figur 5: eine perspektivische Unteransicht des Fahrzeughaubenscharniers gemäß Figur 3 mit sichtbarem Verriegelungselement zwischen einem ersten und einem dritten Scharnierteil des Fahrzeughaubenscharniers,
- Figur 6: eine Schnittansicht des Fahrzeughaubenscharniers gemäß Figur 5 im Bereich eines Verriegelungselements zwischen erstem Scharnierteil und drittem Scharnierteil,
- Figur 7: eine perspektivische Ansicht von aufeinander gefügtem ersten Scharnierteil und drittem Scharnierteil des Fahrzeughaubenscharniers gemäß Figur 3, wobei ein Verformungselement separat gezeigt ist vor dessen Einfügen in schlitzförmige Aufnahmeöffnungen endseitig im ersten und dritten Scharnierteil zum Ausbilden einer Verbindung von diesen,
- Figur 8: eine perspektivische Ansicht des ersten und des dritten Scharnierteils gemäß Figur 7, wobei das Verformungselement in die schlitzförmigen Aufnahmeöffnungen im ersten und dritten Scharnierteil eingefügt ist und eine gemeinsame Drehachse für die beiden Scharnierteile bildet,
- Figur 9: eine perspektivische Detailansicht des Verformungselements gemäß Figur 7 und 8,
- Figur 10: eine Seitenansicht von erstem und drittem Scharnierteil gemäß Figur 8, wobei beide Scharnierteile gegeneinander um einen Winkel α verschwenkt sind zum Einfügen des Verformungselements gemäß Figur 9 in die schlitzförmigen Aufnahmeöffnungen in dem ersten und dem dritten Scharnierteil,
- Figur 11: eine Seitenansicht von erstem und drittem Scharnierteil gemäß Figur 8, wobei diese gegenüber der Position in Figur 10 in ihre Nennlage zurückgeschwenkt sind und dadurch das Verformungselement unter Vorspannung in den schlitzförmigen Aufnahmeöffnungen im ersten und dritten Scharnierteil liegt,
- Figur 12: eine Seitenansicht des Fahrzeughaubenscharniers gemäß Figur 3 mit einem an dessen ersten Scharnierteil angreifenden Aktuator,
- Figur 13: eine Seitenansicht des Fahrzeughaubenscharniers gemäß Figur 12, wobei der Aktuator den ersten Scharnierteil des Fahrzeughaubenscharniers gegenüber dessen dritten Scharnierteil um einen ersten Hubweg angehoben hat zum Aufstellen einer mit dem ersten Scharnierteil verbundenen Fahrzeughaube,
- Figur 14: eine Seitenansicht des Fahrzeughaubenscharniers gemäß Figur 12, wobei der Aktuator dessen ersten und auch dessen dritten Scharnierteil um einen maximal Hubweg angehoben hat,
- Figur 15: eine Seitenansicht des Fahrzeughaubenscharniers gemäß Figur 12, wobei der erste Scharnierteil gegenüber der Position nach Figur 14 wieder etwas abgesenkt und in dieser Position durch Ineinandergreifen zweier Anschlagelemente verrastet ist,
- Figur 16: eine Seitenansicht des erfindungsgemäßen Fahrzeughaubenscharniers gemäß Figur 3 in einer im Normalbetrieb geschlossenen Position und einer im Normalbetrieb geöffneten Position,
- Figur 17: eine perspektivische Ansicht des erfindungsgemäßen Fahrzeughaubenscharniers in der Position gemäß Figur 13 mit ausgeknöpftem Verriegelungselement zwischen erstem und drittem Scharnierteil, jedoch ohne Darstellung des Aktuators,
- Figur 18: eine Teilschnittansicht des Fahrzeughaubenscharniers gemäß Figur 17 im Bereich eines ersten Anschlagelements, wobei das erste Anschlagelement an einer Anschlagfase an dem dritten Scharnierteil entlangfährt und durch diese um eine Wegstrecke x versetzt wird,
- Figur 19: eine Seitenansicht des Fahrzeughaubenscharniers in der Position gemäß Figur 14, jedoch ohne Darstellung des Aktuators, wobei der erste Scharnierteil gegenüber dem dritten Scharnierteil mit einem maximalen Hub aufgestellt ist und das erste Anschlagelement des ersten Scharnierteils in eine Öffnung im dritten Scharnierteil hineinragt,
- Figur 20: eine Teilschnittansicht des Fahrzeughaubenscharniers gemäß Figur 19 im Bereich des in die Öffnung im dritten Scharnierteil hineinragenden ersten Anschlagelements des ersten Scharnierteils,
- Figur 21: eine Seitenansicht des Fahrzeughaubenscharniers in der Position gemäß Figur 15, jedoch ohne Darstellung des Aktuators, wobei sich das erste Anschlagelement des ersten Scharnierteils in der Öffnung auf einer Anschlagfläche als Endanschlag des dritten Scharnierteils abstützt, und
- Figur 22: eine Teilschnittansicht des Fahrzeughaubenscharniers gemäß Figur 21 im Bereich des sich auf der Anschlagfläche der Öffnung im dritten Scharnierteil abstützenden ersten Anschlagelements des ersten Scharnierteils.

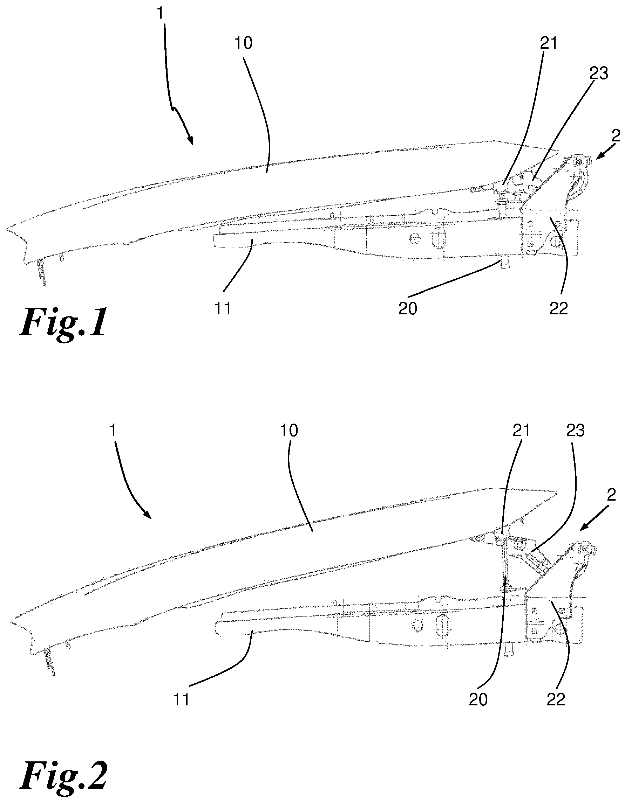

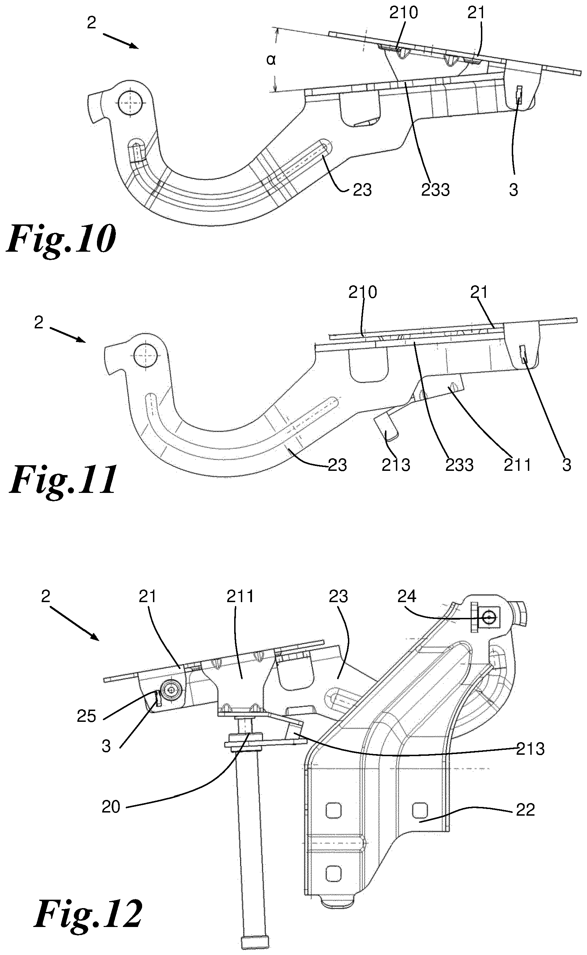

In den Figuren 1 und 2 ist ein Detail eines Fahrzeugs 1 in Form einer Fahrzeughaube 10 und eines Teils einer Fahrzeugkarosserie 11 gezeigt, zwischen denen sich ein Fahrzeughaubenscharnier 2 erstreckt. Das Fahrzeughaubenscharnier 2 ist sowohl mit der Fahrzeughaube 10 als auch mit der Fahrzeugkarosserie 11 verbunden und dient im Normalbetrieb dazu, dass die Fahrzeughaube 10 gegenüber der Fahrzeugkarosserie 11 verschwenkt werden kann. Zu diesem Zweck ist ein erster Scharnierteil 21 an der Fahrzeughaube 10 befestigt, ein zweiter Scharnierteil 22 an der Fahrzeugkarosserie 11 und ein dritter Scharnierteil 23 verbindet den ersten Scharnierteil 21 mit dem zweiten Scharnierteil 22. Der zweite Scharnierteil 22 und der dritte Scharnierteil 23 sind gelenkig miteinander verbunden, während ein Verschwenken von erstem Scharnierteil 22 und dritten Scharnierteil 23 gegeneinander im Normalbetrieb blockiert bzw. gesperrt ist. Ein Verschwenken von erstem Scharnierteil 21 und drittem Scharnierteil 23 gegeneinander wird erst in dem Moment ermöglicht, wo die Fahrzeughaube 10 gegenüber der Fahrkarosserie 11 unter Zuhilfenahme eines Aktuators 20 (siehe Figuren 12 bis 12) aufgestellt wird, um bei einem Unfall mit einem Fußgänger als Fußgängerschutz zu dienen und den Aufprall des Fußgängers auf die Fahrzeughaube 10 abzufangen oder zumindest abzumildern.

Eine solche aufgestellte Position der Fahrzeughaube 10 gegenüber der Fahrzeugkarosserie 11 des Fahrzeugs 1 ist in Figur 2 gezeigt. Hierbei ist erkennbar, dass in dieser Position nicht nur der zweite Scharnierteil 22 gegenüber dem dritten Scharnierteil 23, sondern auch der erste Scharnierteil 21 gegenüber dem dritten Scharnierteil 23 des Fahrzeughaubenscharniers 2 verschwenkt ist. Ferner ist dort erkennbar, dass der Aktuator 20 an dem ersten Scharnierteil 21 angreift. Dies ist im Detail besser in den Figuren 12 bis 15 zu sehen.

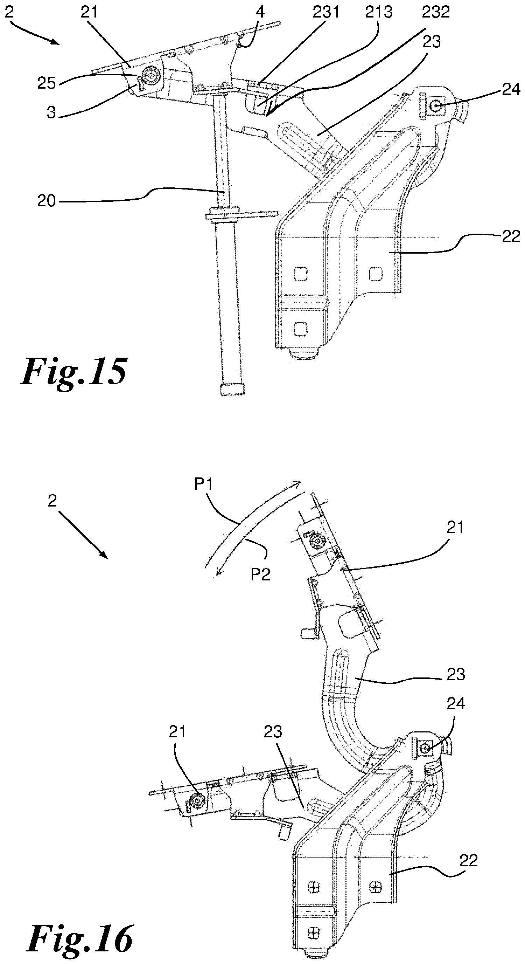

Das Verschwenken der Fahrzeughaube 10 gegenüber der Fahrzeugkarosserie 11, wobei im Normalbetrieb lediglich der dritte Scharnierteil 23 gegenüber dem zweiten Scharnierteil 22 verschwenkt wird, während der erste Scharnierteil 21 und der dritte Scharnierteil 23 aufeinander gefügt sind, kann im Detail Figur 16 entnommen werden. Dort ist die geschlossene Position der mit dem ersten Scharnierteil 21 zu verbindenden Fahrzeughaube 10 (die dort nicht gezeigt ist), im unterem linken Bereich der Figur 16 gezeigt, während die geöffnete Position der Fahrzeughaube, somit die verschwenkte Position des dritten Scharnierteils 23 gegenüber dem zweiten Scharnierteil 22 in dem oberen Bereich der Figur 16 gezeigt ist. Dementsprechend finden sich in Figur 16 auch zwei Pfeile, ein erster Pfeil P1 zum Andeuten des Öffnens und ein zweiter Pfeil P2 zum Andeuten eines Schließens des Fahrzeughaubenscharniers 2 bzw. einer an dessen erstem Scharnierteil 21 befestigten Fahrzeughaube 10 gegenüber einer mit dem zweiten Scharnierteil 22 zu verbindenden Fahrzeugkarosserie 11 (in Figur 16 ebenfalls nicht gezeigt) des Fahrzeugs 1.

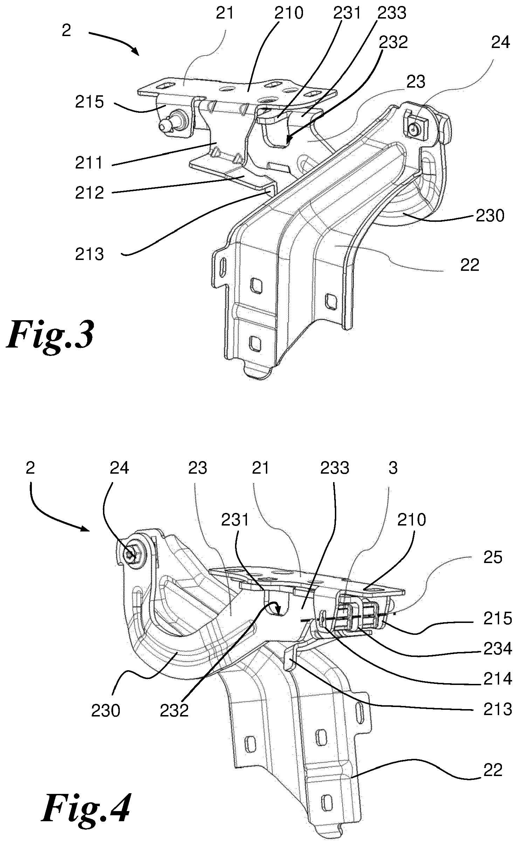

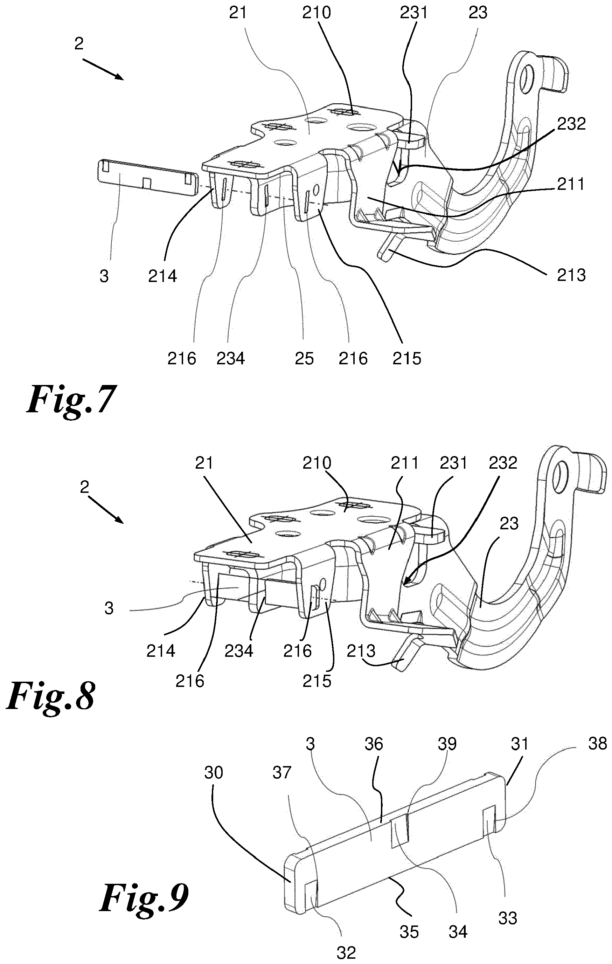

Die Figuren 3 und 4 zeigen die drei Scharnierteile 21, 22, 23. Hierbei ist erkennbar, dass der zweite Scharnierteil 22 mit dem dritten Scharnierteil 23 gelenkig, nämlich über eine Scharnierachse 24, verbunden sind. Der zweite Scharnierteil 22 weist einen gebogenen Abschnitt 230 und einen zwei Anschlagelemente 231, 232 aufweisenden Verbindungsabschnitt 233 auf, der mit dem ersten Scharnierteil 21 verbunden werden kann oder verbunden ist. Endseitig weist der Verbindungsabschnitt 233 zu diesem Zweck eine schlitzförmige Aufnahmeöffnung 234. Dies kann insbesondere auch den Figuren 7 und 8 besonders gut entnommen werden.

Der erste Scharnierteil 21 liegt in der in den Figuren 3 und 4 gezeigten Nennlage bzw. Normalposition auf dem dritten Scharnierteil 23 bzw. dessen Verbindungsabschnitt 233 auf. Der erste Scharnierteil 21 weist in diesem Bereich einen im Wesentlichen flachen Abschnitt 210 auf, der mit der Fahrzeughaube 10 verbunden werden kann. In einem Winkel von dem flachen Abschnitt 210 in Richtung zu dem dritten Scharnierteil 23 abgewinkelt erstreckt sich ein in der Seitenansicht etwa L-förmig abgewinkelter Verbindungsabschnitt 211, von dem wiederum ein elastischer Verbindungsabschnitt 212 absteht und endseitig mit einem ersten Anschlagelement 213 des ersten Scharnierteils 21 versehen ist. Der erste Scharnierteil 21 weist ferner endseitig zwei vom flachen Abschnitt 210 abgewinkelte Laschen 214, 215 auf, die jeweils mit schlitzförmigen Aufnahmeöffnungen 216 versehen sind (siehe auch Figuren 7 und 8). Die schlitzförmigen Aufnahmeöffnungen 216 des ersten Scharnierteils 21 und die schlitzförmige Aufnahmeöffnung 234 des dritten Scharnierteils 23 werden fluchtend zueinander angeordnet und durch diese hindurch ein Verformungselement 3 hindurchgeführt (siehe auch Figuren 7 und 8). Das Verformungselement 3 liegt somit in den schlitzförmigen Aufnahmeöffnungen 216 und 234 der beiden Scharnierteile 21, 23.

Über das Verformungselement 3 werden somit der erste Scharnierteil 21 und der dritte Scharnierteil 23 miteinander verbunden. Zugleich wird durch diese Verbindung eine gemeinsame Drehachse 25 von erstem Scharnierteil 21 und drittem Scharnierteil 23 ausgebildet zum Ausbilden eines Gelenks zwischen diesen, wie in Figur 4 angedeutet. Die gemeinsame Drehachse 25 von erstem Scharnierteil 21 und drittem Scharnierteil 23 liegt in dem Verformungselement 3. Diese gemeinsame Drehachse 25 dient als zusätzlicher Freiheitsgrad des Fahrzeughaubenscharniers 2 zum Aufstellen der Fahrzeughaube 10 im Falle eines Aufpralls eines Fußgängers bei einem Unfall des Fußgängers mit dem Fahrzeug 1, es stellt somit ein zusätzliches Gelenk des Fahrzeughaubenscharniers 2 dar, das zusätzlich zu dem um die Scharnierachse 24 ausgebildeten Gelenk zwischen zweitem Scharnierteil 22 und drittem Scharnierteil 23 vorgesehen ist.

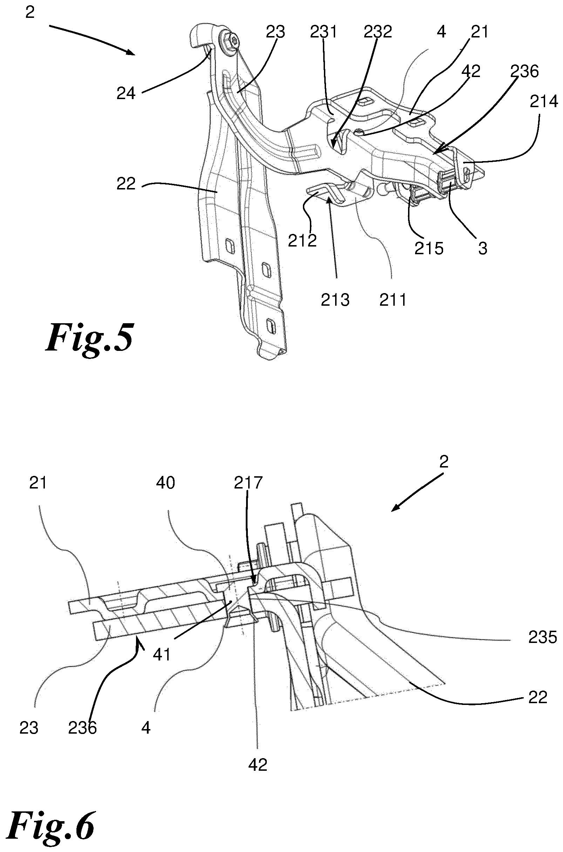

Dieses zusätzliche Gelenk im Bereich der gemeinsamen Drehachse 25 ist im Normalbetrieb blockiert bzw. gesperrt durch ein Verriegelungselement 4. Das Verriegelungselement 4 verbindet den ersten Scharnierteil 21 im Bereich von dessen flachen Abschnitt 210 mit dem dritten Scharnierteil 23, wie dies besser den Figuren 5 und 6 entnommen werden kann. In Figur 6 ist das Verriegelungselement 4 nach Art eines Niets gezeigt. Dieser weist einen Kopf 40, einen etwa zylindrischen Körper 41 sowie einen dem Kopf 40 gegenüberliegenden aufgeweiteten Endabschnitt 42 auf. Mit dem zylindrischen Körper 41 liegt das Verriegelungselement 4 formschlüssig in einer Aufnahmeöffnung 235 des dritten Scharnierteils 23, mit seinem Kopf 40 in einer Ausformung 217 des ersten Scharnierteils 21 und mit seinem aufgeweiteten Endabschnitt 42 auf der dem ersten Scharnierteil 21 abgewandten Außenseite 236 des dritten Scharnierteils 23 auf, wobei der aufgeweitete Endabschnitt 42 und der Kopf 40 zusammen eine kraftschlüssige Verbindung von erstem Scharnierteil 21 und drittem Scharnierteil 23 ermöglichen.

Das Verformungselement 3 ist als flaches längliches, in Figur 9 etwa rechtwinklig bzw. quaderförmig gezeigtes Element ausgebildet, das entlang seiner Längserstreckung im Randbereich endseitig Bereich seiner beiden einander gegenüberliegenden schmalen Enden 30, 31 Verprägungen bzw. Vertiefungen 32, 33 aufweist. Ferner ist eine weitere Vertiefung 34 diesen gegenüberliegend im bezüglich der Längserstreckung des Verformungselements 3 mittleren Randbereich angeordnet. Die ersten und zweiten Vertiefungen 32, 33 sind randseitig bezüglich der ersten Längsseite 35 ausgebildet, während die dritte Vertiefung 34 randseitig, ausgehend von der gegenüberliegenden zweiten Längsseite 36 ausgebildet ist.

Alle Vertiefungen 33 bis 35 weisen jeweils randseitige bzw. axiale Begrenzungsabschnitte 37, 38, 39 auf. Wie insbesondere den Figuren 7 und 8 entnommen werden kann, wird das Verformungselement 3 so in die schlitzförmigen Aufnahmeöffnungen 216, 234 eingefügt, dass die erste Vertiefung 32 und die zweite Vertiefung 33 in den beiden schlitzförmigen Aufnahmeöffnungen 216 der Laschen 214, 215 des ersten Scharnierteils 21 liegen, während die dritte Vertiefung 34 in der schlitzförmigen Aufnahmeöffnung 234 des dritten Scharnierteils 23 liegt. Zur Montage des Verformungselements 3 werden zunächst die beiden Scharnierteile 21, 23 gegeneinander verdreht, wie dies Figur 10 entnommen werden kann. Es ergibt sich die um einen Winkel α gegeneinander verdrehte Position des ersten Scharnierteils 21 gegenüber dem dritten Scharnierteil 23, die in Figur 10 zu sehen ist. Das Verformungselement 3 wird in dieser Position der beiden Scharnierteile 21, 23 in deren schlitzförmige Aufnahmeöffnungen 216, 234 eingefügt und nachfolgend die beiden Scharnierteile 21, 23 in ihre Nennlage, die in Figur 11 gezeigt ist, zurückgedreht. Hierbei kehrt der flache Abschnitt 210 des ersten Scharnierteils 21 wieder in seine Ausgangslage auf dem Verbindungsabschnitt 233 des dritten Scharnierteils 23 zurück und liegt wieder auf diesem auf. Hierdurch erfolgt eine axiale Verriegelung des Verformungselements 3 mit den beiden Scharnierteilen 21, 23 aufgrund der randseitigen bzw. axialen Begrenzungsabschnitte 37, 38, 39, die axial in den schlitzförmigen Aufnahmeöffnungen 216, 234 bzw. den entsprechenden Laschen 214, 215 des ersten Scharnierteils und in dem Verbindungsabschnitt 233 des dritten Scharnierteils 23 nach dem Zurückschwenken der beiden Scharnierteile 21, 23 aus dem Montagelage und damit dem Winkel α in die in Figur 11 gezeigte Nennlage liegen.

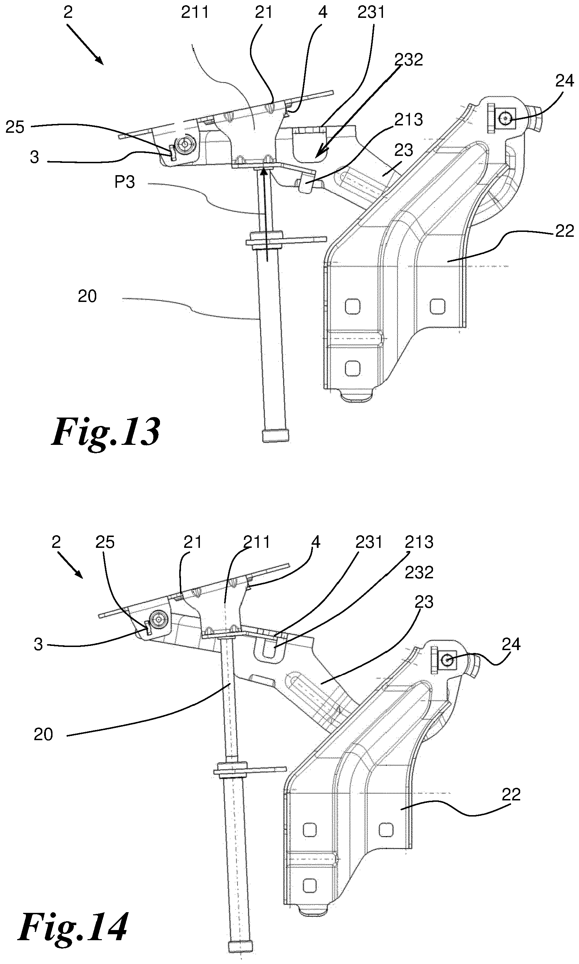

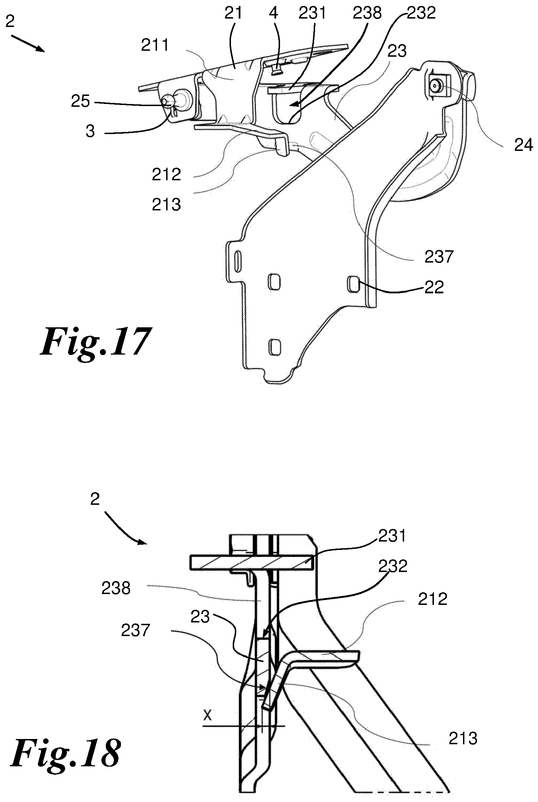

Die randseitigen bzw. axialen Begrenzungsabschnitte 37, 38, 39 dienen somit dem axialen Halt des Verformungselementes 3 in den schlitzförmigen Aufnahmeöffnungen 216, 234 der beiden Scharnierteile 21, 23. Aufgrund des Verdrehens der beiden Scharnierteile 21, 23 aus der zueinander im Winkel α stehenden Position in die Nennlage, wie sie in Figur 11 gezeigt ist, wird das Verformungselement 3 zugleich unter eine Vorspannung versetzt, liegt also in der Nennlage unter Vorspannung um die gemeinsame Drehachse 25 von erstem Scharnierteil 21 und drittem Scharnierteil 23 in deren schlitzförmigen Aufnahmeöffnungen 216, 234. Diese Vorspannung kann die Aufstellbewegung der Fahrzeughaube 10 gegenüber der Fahrzeugkarosserie 11 zu Beginn der Aufstellbewegung beschleunigen bzw. unterstützen. Im Falle eines Unfalls mit einem Fußgänger wird der Aktuator 20 ausgelöst. Dieser stützt sich an dem gewinkelten Verbindungsabschnitt 211 des ersten Scharnierteils 21 ab, wie dies in Figur 12 gut zu sehen ist. Im Auslösefall drückt der Aktuator 20 mit seiner Aufstellkraft, die durch den Pfeil P3 in Figur 13 angedeutet ist, den ersten Scharnierteil 21 weg von dem dritten Scharnierteil 23. Hierdurch löst sich das Verbindungselement 4 aus der Aufnahmeöffnung 235 im dritten Scharnierteil 23, wird sozusagen ausgeknöpft aus der Aufnahmeöffnung 235 , wie dies auch im Detail Figur 17 noch besser entnommen werden kann. Der Aktuator 20 teleskopiert weiter, drückt somit mit der Aufstellkraft (Pfeil P3) den ersten Scharnierteil 21 weg von dem dritten Scharnierteil 23 und diesen auch weg von dem zweiten Scharnierteil 22, wie dies in Figur 14 gezeigt ist. Hierbei verschwenkt auch der dritte Scharnierteil 23 gegenüber dem zweiten Scharnierteil 22.

Nach Erreichen einer maximalen Aufstellhöhe, somit des maximalen Hubwegs oder Aufstellhubs, und Anschlagen des ersten Anschlagselements 213 des ersten Scharnierteils 21 an dem zweiten Anschlagelement 231 des dritten Scharnierteils 23, wie dies in Figur 14 ebenfalls zu sehen ist, sinkt der erste Scharnierteil 21 wieder etwas ab, insbesondere durch nachlassende Aufstellkraft, so dass sich das erste Anschlagelement 213 am dritten Anschlagelement 232 des dritten Scharnierteils 23 abstützt, wie dies in Figur 15 gezeigt ist.

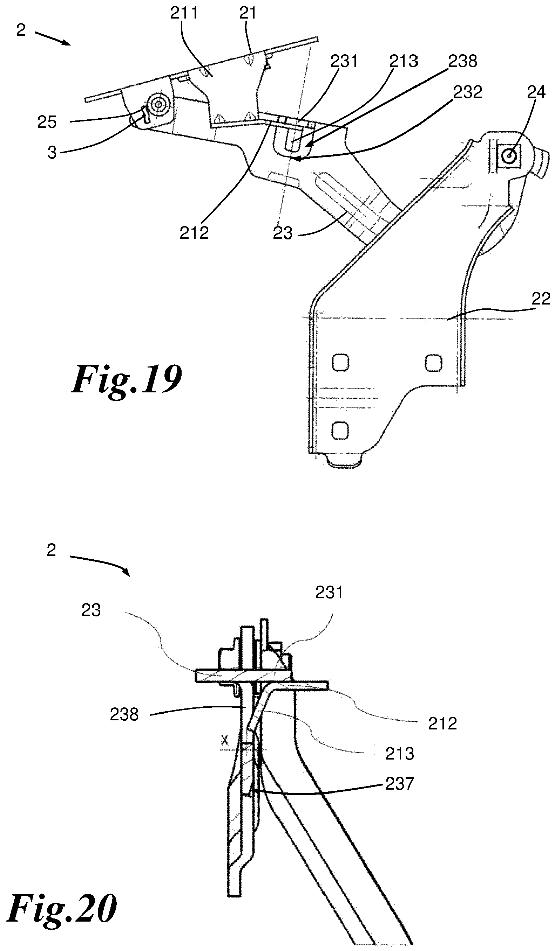

In den Figuren 17 bis 22 ist das Ineinandergreifen des ersten Anschlagelements 213 des ersten Scharnierteils 21 und des zweiten Anschlagelements 231 bzw. des ersten Anschlagelements 213 des ersten Scharnierteils 21 und des dritten Anschlagelements 232 des dritten Scharnierteils 23 im Detail gezeigt. Wie Figur 18 entnommen werden kann, gleitet das erste Anschlagelement 213 an einer Anschlagfase 237 des dritten Scharnierteils 23 entlang und wird hierdurch um eine Wegstrecke x in Richtung weg von dem dritten Scharnierteil 23 gedrückt. Hierdurch ist es möglich, dass das erste Anschlagelement 213 außenseitig an dem dritten Scharnierteil 23 vorbeigeführt wird bzw. an diesem entlanggleitet. Wie den Figuren 19 und 20 zu entnehmen ist, stößt das erste Anschlagelement 213 bzw. der elastische Verbindungsabschnitt 212 des ersten Scharnierteils 21 an dem zweiten Anschlagelement 231 des dritten Scharnierteils 23 an, so dass das zweite Anschlagelement 231 als oberer Endanschlag zum Begrenzen der Aufstellbewegung der Fahrzeughaube 10 gegenüber der Fahrzeugkarosserie 11 dient. In dieser Position wird ein maximaler Aufstellhub erreicht. Aufgrund der Elastizität des elastischen Verbindungsabschnitts 212 des ersten Scharnierteils 21, dessen Ende das erste Anschlagelement 213 bildet, bewegt sich dieses wieder um die Wegstrecke x in Richtung des dritten Scharnierteils 23 zurück, sobald es nicht mehr auf dessen Außenseite anliegt, und taucht in eine Aufnahmeöffnung 238 des dritten Scharnierteils 23, die das dritte Anschlagelement 232 umfasst, ein, wie dies in Figur 20 besonders gut zu sehen ist. Hierbei ist auch das Zurückbewegen des ersten Anschlagelementes 213 um die Wegstrecke x sehr gut erkennbar. Durch das zweite Anschlagelement 231 wird somit eine weitere Aufwärtsbewegung der Fahrzeughaube 10 begrenzt.

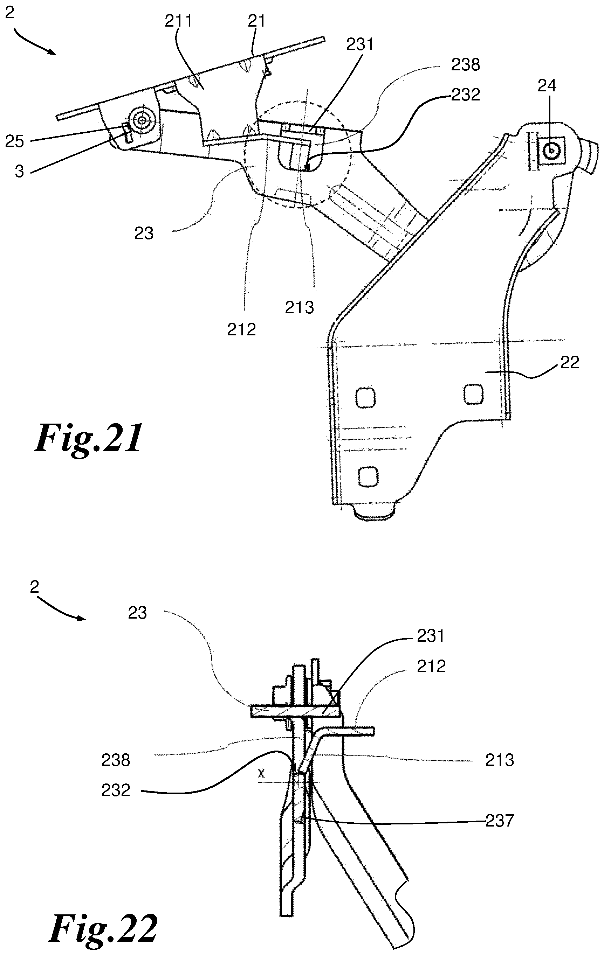

Das in die Aufnahmeöffnung 238 bzw. das Aufnahmefenster im dritten Scharnierteil 23 zurückgeschwungene erste Anschlagelement 213 stützt sich sodann auf dem dritten Anschlagelement 232, hier einer Begrenzungswandung der Aufnahmeöffnung 238, ab, so dass eine stabile Verrastungsposition eingenommen wird, wie den Figuren 21 und 22 zu entnehmen. Ein Rückschwingen der Fahrzeughaube 10 in ihre Ausgangslage wird hierdurch somit verhindert. Der Fußgängerschutz kann hierdurch optimal ausgeübt werden. Je nach Wahl des Aktuators 20 kann zudem eine weitere Aufwärtsbewegung auch durch dessen Stoppen verhindert werden. Beispielsweise kann der Aktuator 20 ein pyrotechnisch angetriebener Aktuator sein.

Zum Abbremsen der Aufstellbewegung vor dem Erreichen des maximalen Aufstellhubs, also vor Erreichen des zweiten Anschlagelementes 231 des dritten Scharnierteils 23 durch das erste Anschlagelement 213 des ersten Scharnierteils 21, kann die Verformungsenergie des Verformungselementes 3 genutzt werden. Dieses kann somit als Dämpfungselement dienen, um die Bewegung am Ende des Aufstellvorgangs zu dämpfen.

Soll die Fahrzeughaube 10 später wieder in ihre Ausgangslage, also ihre Nennlage wie sie in Figur 1 gezeigt ist, zurückgeführt werden, wird das erste Anschlagelement 213 zunächst aus der Aufnahmeöffnung 238 und somit aus der Verrastung mit dem dritten Anschlagelement 232 gelöst und um die Wegstrecke x weg von dem dritten Scharnierteil 23 gedrückt, um damit die Verrieglung von erstem Scharnierteil 21 und drittem Scharnierteil 23 zu lösen. Nachfolgend kann die Fahrzeughaube 10 wieder in ihre Ausgangslage zurückgedrückt werden.

Die Regulierung der Kraft für das Entriegeln des Verriegelungselementes 4, somit das Verformen von dessen aufgeweiteten Endabschnitts 42, kann über dessen Wandungsdicke und den Winkel des aufgeweiteten Endabschnitts 42 und die weiteren Abmessung von diesem erfolgen. Die Belastung des Verriegelungselementes 4 in dessen Querrichtung, also quer oder senkrecht zu diesem, erfolgt als Scherbelastung und ist signifikant größer als die axiale Belastung, die zu einer Verformung des aufgeweiteten Endabschnitts 42 des Verriegelungselementes 4 führt und somit zu einem Ausknöpfen von diesem aus der Aufnahmeöffnung 235 in dem dritten Scharnierteil 23.

Das Verriegelungselement 4 ist entfernt von der gemeinsamen Drehachse 25 zwischen erstem Scharnierteil 21 und drittem Scharnierteil 23 und dementsprechend so angeordnet, dass im Missbrauchsfall beim Überdrücken der Fahrzeughaube 10 in deren Öffnungsrichtung, wie sie durch den Pfeil P1 in Figur 16 angedeutet ist, das Verriegelungselement 4 nicht belastet wird. Dementsprechend erfolgt in diesem Falle keine Beschädigung des Verriegelungselementes 4. Dieses verbleibt beschädigungsfrei in der Aufnahmeöffnung 235 des dritten Scharnierteils 23.

Durch das Vorsehen der Vertiefungen 32 bis 34 und der diese randseitig begrenzenden axialen Begrenzungsabschnitte 37, 38, 39 des Verformungselements 3 ist eine werkzeuglose Montage des Verformungselements 3 an den beiden Scharnierteilen 21, 23 möglich, ohne dass zusätzliche Niet- oder Einpressprozesse erforderlich sind. Durch die Vorspannung des Verformungselements 3 innerhalb der schlitzförmigen Aufnahmeöffnungen 216, 234 des ersten Scharnierteils 21 bzw. des dritten Scharnierteils 23 kann die Verbindung der beiden Scharnierteile 21, 23 spielfrei und damit geräuschfrei gehalten werden.

Außer dem Ausbilden des Verformungselements 3 als separatem Bauteil, wie dies in Figur 9 gezeigt ist, könnte das Verformungselement 3 auch in den ersten Scharnierteil 21 bzw. den dritten Scharnierteil 23 integriert sein und jeweils mit dem anderen der beiden Scharnierteile 21, 23 fest verbunden werden. Eine solche feste Verbindung kann beispielsweise durch Nieten oder Clinchen als form- und kraftschlüssige Verbindungen oder durch eine stoffschlüssige Verbindung, wie Schweißen, erfolgen. Ferner ist es möglich, dass beide Scharnierteile 21, 23 jeweils einen Teilabschnitt ausbilden, diese beiden Teilabschnitte durch ein entsprechend geformtes Verformungselement miteinander verbunden werden, somit ein komplexes Bauteil ausgebildet wird, das die beiden Scharnierteile 21, 23 und das Verformungselement 3 umfasst. Hierbei kann das Verformungselement 3 beispielsweise als Filmscharnier zwischen dem ersten Scharnierteil 21 und dem dritten Scharnierteil 23 ausgebildet werden.

Außer dem in den Figuren gezeigten Eingelenkscharnier kann das Fahrzeughaubenscharnier auch in Verbindung mit einem Mehrgelenkscharnier vorgesehen werden, wobei die Scharnierachse 24 als Drehachse zwischen dem zweiten Scharnierteil 22, das mit der Fahrzeugkarosserie 11 verbunden wird, und dem dritten Scharnierteil 23 dann dem Momentan-Pol des Mehrgelenkscharniers entspricht.

Neben den im Vorstehenden beschriebenen und in den Figuren gezeigten Ausführungsvarianten eines erfindungsgemäßen Fahrzeughaubenscharniers für ein Fahrzeug, das zumindest ein erstes Scharnierteil, das mit der Fahrzeughaube fest verbunden wird oder werden kann, zumindest ein zweites Scharnierteil, das mit einer Fahrzeugkarosserie fest verbindbar oder verbunden ist, und zumindest ein drittes Scharnierteil umfasst, wobei das zumindest eine dritte Scharnierteil das zumindest eine erste Scharnierteil mit dem zumindest einen zweiten Scharnierteil gelenkig verbindet, können noch zahlreiche weitere ausgebildet werden, insbesondere auch beliebige Kombinationen der vorstehend genannten Merkmale, wobei zumindest ein Verformungselement vorgesehen ist, über das das zumindest eine erste Scharnierteil und das zumindest eine dritte Scharnierteil miteinander verbunden sind bzw. werden können, wobei das zumindest eine Verformungselement in einer gemeinsamen Drehachse des zumindest einen ersten Scharnierteils und des zumindest einen dritten Scharnierteils angeordnet wird und bei Verdrehen der beiden Scharnierteile um ihre gemeinsame Drehachse herum gezielt deformiert werden kann und einer Relativbewegung der beiden Scharnierteile entgegenwirkt. Die gemeinsame Drehachse des zumindest einen ersten Scharnierteils und des zumindest einen dritten Scharnierteils dient als zusätzliches Gelenk zum Aufstellen der Fahrzeughaube des Fahrzeugs im Falle eines Aufpralls eines Fußgängers. Dieses zusätzliche Gelenk kann im Normalbetrieb durch zumindest ein Verriegelungselement verriegelbar oder verriegelt sein.

### Bezugszeichenliste

- 1: Fahrzeug
- 2: Fahrzeughaubenscharnier
- 3: Verformungselement
- 4: Verriegelungselement
- 10: Fahrzeughaube
- 11: Fahrzeugkarosserie
- 20: Aktuator
- 21: erster Scharnierteil
- 22: zweiter Scharnierteil
- 23: dritter Scharnierteil
- 24: Scharnierachse
- 25: gemeinsame Drehachse
- 30: erstes schmales Ende
- 31: zweites schmales Ende
- 32: erste Vertiefung
- 33: zweite Vertiefung
- 34: dritte Vertiefung
- 35: erste Längsseite
- 36: zweite Längsseite
- 37: randseitiger/axialer Begrenzungsabschnitt
- 38: randseitiger/axialer Begrenzungsabschnitt
- 39: randseitiger/axialer Begrenzungsabschnitt
- 40: Kopf
- 41: zylindrischer Körper
- 42: aufgeweiteter Endabschnitt
- 210: flacher Abschnitt
- 211: abgewinkelter Verbindungsabschnitt
- 212: elastischer Verbindungsabschnitt
- 213: erstes Anschlagelement
- 214: Lasche
- 215: Lasche
- 216: schlitzförmige Aufnahmeöffnung
- 217: Ausformung
- 230: gebogener Abschnitt
- 231: zweites Anschlagelement
- 232: drittes Anschlagelement
- 233: Verbindungsabschnitt
- 234: schlitzförmige Aufnahmeöffnung
- 235: Aufnahmeöffnung
- 236: Außenseite
- 237: Anlauffase
- 238: Aufnahmeöffnung
- x: Wegstrecke
- α: Winkel
- P1: Öffnungsbewegung des Fahrzeughaubenscharniers
- P2: Schließbewegung des Fahrzeughaubenscharniers
- P3: Aufstellkraft

## Patentansprüche

1. Fahrzeughaubenscharnier (2) für ein Fahrzeug (1), umfassend zumindest ein erstes Scharnierteil (21), das mit einer Fahrzeughaube (10) fest verbindbar oder verbunden ist, zumindest ein zweites Scharnierteil (22), das mit einer Fahrzeugkarosserie (11) fest verbindbar oder verbunden ist, und zumindest ein drittes Scharnierteil (23), wobei das zumindest eine dritte Scharnierteil (23) das zumindest eine erste Scharnierteil (21) mit dem zumindest einen zweiten Scharnierteil (22) gelenkig verbindet,
**dadurch gekennzeichnet, dass**
das zumindest eine erste Scharnierteil (21) und das zumindest eine dritte Scharnierteil (23) vermittels zumindest eines Verformungselements (3) miteinander verbunden sind und eine gemeinsame Drehachse (25) aufweisen, wobei das Verformungselement (3) bei Verdrehen der Scharnierteile (21, 23) um ihre gemeinsame Drehachse (25) gezielt deformierbar ist und einer Relativbewegung der Scharnierteile (21, 23) entgegenwirkt, und wobei diese gemeinsame Drehachse (25) als zusätzliches Gelenk zum Aufstellen der Fahrzeughaube (10) des Fahrzeugs (1) im Falle eines Aufpralls eines Fußgängers dient, wobei dieses zusätzliche Gelenk im Normalbetrieb durch zumindest ein Verriegelungselement (4) verriegelbar oder verriegelt ist.

2. Fahrzeughaubenscharnier (2) nach Anspruch 1,
**dadurch gekennzeichnet, dass**
das zumindest eine Verriegelungselement (4) als kraft- und/oder formschlüssig mit dem zumindest einen ersten Scharnierteil (21) und dem zumindest einen dritten Scharnierteil (23) verbindbares oder verbundenes Element ausgebildet ist, insbesondere zumindest einen ersten Abschnitt (42) zum form- und/oder kraftschlüssigen Verbinden mit zumindest einem der beiden Scharnierteile (21, 23) und zumindest einen zweiten Abschnitt (41) zum formschlüssigen Verbinden mit dem anderen der beiden Scharnierteile (21, 23) aufweist.

3. Fahrzeughaubenscharnier (2) nach Anspruch 1 oder 2,
**dadurch gekennzeichnet, dass**
zumindest eine Aufstell- und Entriegelungseinrichtung (20) zum Ausüben einer Aufstell- und Entriegelungskraft (P3) auf das zumindest eine erste Scharnierteil (21) vorgesehen ist.

4. Fahrzeughaubenscharnier (2) nach einem der vorstehenden Ansprüche,
**dadurch gekennzeichnet, dass**
das zumindest eine Verriegelungselement (4) an dem zumindest einen ersten Scharnierteil (21) und/oder dem zumindest einen dritten Scharnierteil (23) so angeordnet ist, dass das zumindest eine Verriegelungselement (4) beim Überdrücken der Fahrzeughaube (10) in Öffnungsrichtung (P1) unbelastet bleibt.

5. Fahrzeughaubenscharnier (2) nach einem der vorstehenden Ansprüche,
**dadurch gekennzeichnet, dass**
das zumindest eine Verformungselement (3) mit dem zumindest einen ersten Scharnierteil (21) und/oder dem zumindest einen dritten Scharnierteil (23) fest verbunden oder einteilig ausgebildet ist.

6. Fahrzeughaubenscharnier (2) nach einem der vorstehenden Ansprüche,
**dadurch gekennzeichnet, dass**
das zumindest eine Verformungselement (3) in seiner Nennposition unter einer Vorspannung um die gemeinsame Drehachse (25) des zumindest einen ersten Scharnierteils (21) und des zumindest einen dritten Scharnierteils (23) steht.

7. Fahrzeughaubenscharnier (2) nach einem der vorstehenden Ansprüche,
**dadurch gekennzeichnet, dass**
das zumindest eine Verformungselement (3) entlang seiner Längserstreckung mit zumindest zwei Ausformungen (32, 33, 34) versehen ist, die mit Abschnitten (216, 234) der beiden Scharnierteile (21, 23) ineinandergreifen zum Erzielen einer axialen Verriegelung des zumindest einen Verformungselements (3) mit den beiden Scharnierteilen (21, 23).

8. Fahrzeughaubenscharnier (2) nach Anspruch 7,
**dadurch gekennzeichnet, dass**
die Abschnitte (216, 234) der beiden Scharnierteile (21, 23) Aufnahmeöffnungen, insbesondere schlitzförmige Aufnahmeöffnungen, sind oder umfassen.

9. Fahrzeughaubenscharnier (2) nach Anspruch 7 oder 8,
**dadurch gekennzeichnet, dass**
die zumindest zwei Ausformungen (32, 33, 34) entlang der Längserstreckung des zumindest einen Verformungselements (3) Vertiefungen oder Nuten mit randseitigen oder axialen Begrenzungen (37, 38, 39) sind, insbesondere abwechselnd an den zwei einander gegenüberliegenden Längsseiten (35, 36) des Verformungselements (3) Vertiefungen oder Nuten angeordnet sind.

10. Fahrzeughaubenscharnier (2) nach einem der vorstehenden Ansprüche,
**dadurch gekennzeichnet, dass**
zumindest ein erstes Anschlagelement (213) vorgesehen und mit dem zumindest einen ersten Scharnierteil (21) verbunden und zumindest eine Anlauffase (237) an dem zumindest einen dritten Scharnierteil (23) vorgesehen ist, wobei das zumindest eine erste Anschlagelement (213) so an dem zumindest einen ersten Scharnierteil (21) angeordnet ist, dass es beim Verschwenken des zumindest einen ersten Scharnierteils (21) die zumindest eine Anlauffase (237) kontaktiert und durch diese um eine Wegstrecke (x) in Richtung weg von dem zumindest einen dritten Scharnierteil (23) verschiebbar ist oder verschoben wird.

11. Fahrzeughaubenscharnier (2) nach Anspruch 9,
**dadurch gekennzeichnet, dass**
das zumindest eine erste Anschlagelement (213) mittels zumindest eines elastischen Verbindungsabschnitts (212) des zumindest einen ersten Scharnierteils (21) ist oder mit dem zumindest einen ersten Scharnierteil (21) verbunden ist, insbesondere das zumindest eine erste Scharnierteil (21), das zumindest eine erste Anschlagelement (213) und den zumindest einen elastischen Verbindungsabschnitt (212) einteilig sind.

12. Fahrzeughaubenscharnier (2) nach Anspruch 10 oder 11,
**dadurch gekennzeichnet, dass**
der zumindest eine dritte Scharnierteil (23) zumindest ein zweites Anschlagelement (231) aufweist, wobei das zumindest eine zweite Anschlagelement (231) als Anschlag für das zumindest eine erste Anschlagelement (213) des zumindest einen ersten Scharnierteils (21) bei dessen Bewegung in Aufstellrichtung der Fahrzeughaube (10) dient.

13. Fahrzeughaubenscharnier (2) nach einem der Ansprüche 10 bis 12,
**dadurch gekennzeichnet, dass**
der zumindest eine dritte Scharnierteil (23) zumindest ein drittes Anschlagelement (232), insbesondere in zumindest einer Aufnahmeöffnung (238), in die das zumindest eine erste Anschlagelement (213) aufnehmbar ist, aufweist, wobei das zumindest eine dritte Anschlagelement (232) als Anschlag für das zumindest eine erste Anschlagelement (213) des zumindest einen ersten Scharnierteils (21) bei dessen Bewegung entgegen der Aufstellrichtung der Fahrzeughaube (10) dient.
